(19) **Europäisches Patentamt**

**European Patent Office**

**Office européen des brevets**

(11) **EP 0 856 831 B1**

(12) **EUROPEAN PATENT SPECIFICATION**

(45) Date of publication and mention
of the grant of the patent:
**12.10.2005   Bulletin 2005/41**

(51) Int Cl.⁷: **G10K 11/34**

(21) Application number: **98101598.5**

(22) Date of filing: **30.01.1998**

(54) **Focusing delay calculation method for real-time digital focusing and apparatus adopting the same**

Verfahren zur Fokussierverzögerungsberechnung für digitalen Echtzeitfokussierung und Vorrichtung mit derselben

Procédé de calcul le retard de focalisation pour la focalisation digitale en temps réel et dispositif utilisant ceci

(84) Designated Contracting States:
**DE FR GB IT NL**

(30) Priority:  **04.02.1997  KR 9703418**

(43) Date of publication of application:
**05.08.1998   Bulletin 1998/32**

(73) Proprietor: **MEDISON CO., LTD.**
**Kangwon-do 250-870 (KR)**

(72) Inventor: **Bae, Moo-Ho**
**Nowon-gu, Seoul (KR)**

(74) Representative: **Sama, Daniele et al**
**Sama Patents,**
**Via G.B. Morgagni, 2**
**20129 Milano (IT)**

(56) References cited:
**EP-A- 0 696 791**       **EP-A- 0 782 126**
**US-A- 5 230 340**       **US-A- 5 724 972**

• **KI JEON ET AL: "AN EFFICIENT REAL TIME FOCUSING DELAY CALCULATION IN ULTRASONIC IMAGING SYSTEMS" ULTRASONIC IMAGING,US,DYNAMEDIA, INC., SILVER SPRING, MD, vol. 16, no. 4, 1 October 1994 (1994-10-01), pages 231-248, XP000523863 ISSN: 0161-7346**

**Description**

## BACKGROUND OF THE INVENTION

The present invention relates to a focusing delay calculation method for a real-time digital focusing for use in an ultrasonic imaging system, and an apparatus adopting the same.

In case of the ultrasonic reception focusing, distances from a reflection source into which ultrasonic pulses are focused to array elements in a transducer array, are varied. In addition, when a focal point is varied, a variation of the distances between the array elements and the focal point becomes also different from each other. Thus, for a real-time digital reception focusing in an ultrasonic image system, generation of different sampling clock pulses is required with respect to the array elements having each of different distances from the reflection source.

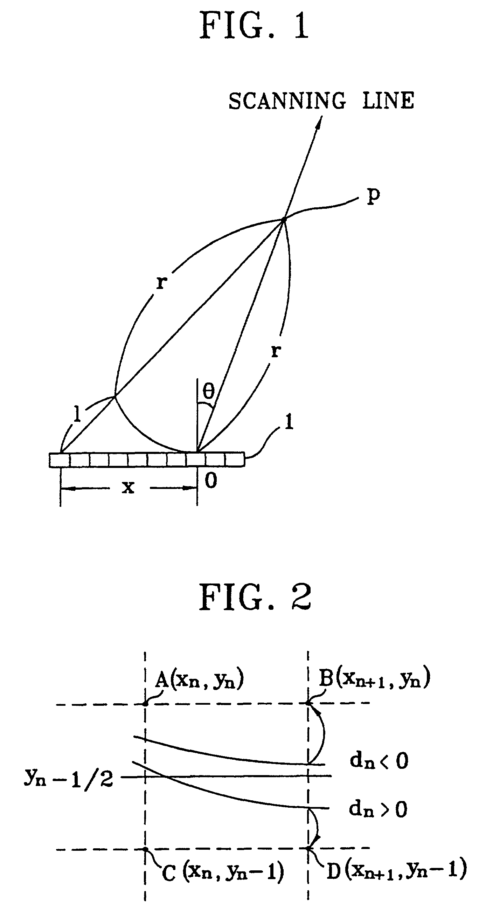

Accordingly, the applicant of this application has proposed a real-time digital reception focusing method and apparatus on the basis of a midpoint algorithm disclosed in an article entitled "An efficient ellipse-drawing algorithm" of Van Aken, J. R. in IEEE Computer Graphics and Application Magazine, vol. 4, no. 9, pp. 24-35, 1984. The digital reception focusing method and apparatus proposed by the applicant determines an integer focusing delay distance in order to generate sampling clock, and generates sampling clock for each array element using the determined integer focusing delay distance. Prior to describing the determination of the integer focusing delay distance, geometrical relationship of the array elements involving with a specific focal point will be described with reference to Fig. 1 as follows.

An array transducer 1 shown in Fig. 1 has a one-dimensional linear array. Each array element 1A is arranged at a certain interval along the horizontal axis. The center of the array transducer 1 is positioned at the origin "○". The reference character "x" is an abscissa from the center of each array element, and $\theta$ denotes a steering angle which is generally zero in case of a linear array, **r** denotes a focusing reference distance between the array element positioned at the center of the array transducer and a focal point P, and *l* denotes a real-number focusing delay distance with respect to each of remaining array elements.

When a medium in which an ultrasonic wave travels is an un-damped medium having homogeneity, using the definitions relevant to Fig. 1, a focusing delay time of each array element is represented as a time when it takes an ultrasonic wave to travel, by a distance *l* expressed as the following equation (1),

$$l = (r^2 + \alpha r + \beta)^{1/2} - r \tag{1}$$

In above equation (1), $\alpha = 2x\sin\theta$ and $\beta = x^2$. **r** is varied according to the distance up to a reflection source (not shown), and $\theta$ is not varied with respect to a scanning line. Also, x has a constant value with respect to a given array element. Thus, if a real number *l* satisfying equation (1) with respect to the given **r** can be obtained, a focusing delay time can be obtained, and accordingly a sampling clock with respect to corresponding array transducer.

In equation (1), **r** is moved to the other side and then both sides are squared, a function *f*(**r**, *l*) expressed as the following equation (2) can be obtained.

$$f(r, l) = l^2 + 2lr - \alpha r - \beta = 0 \tag{2}$$

In equation (2), when all coefficients are integer, and **r** and *l* satisfy a condition expressed as the following inequality (3), the ultrasonic imaging system can use a midpoint algorithm for calculation of the focusing delay distance.

$$-1 \leq dl/dr \leq 0 \tag{3}$$

Referring to Fig. 2, a process of selecting the next point using a midpoint algorithm is described. In Fig. 2, when two curves expressed as solid lines indicate continuous curves of the two cases requiring approximation, assuming that a point $A(x_n, y_n)$ shown in Fig. 2 is selected at the n-*th* drawing stage, a point at the (n+1)*th* drawing stage becomes either $B(x_{n+1}, y_n)$ or $D(x_{n+1}, y_n-1)$. A decision variable $\boldsymbol{d}_n$ is used for determining one of the two finally. If a value of the decision variable $\boldsymbol{d}_n$ is greater than 0, it is determined that the curve becomes closer to $D(x_{n+1}, y_n-1)$, while if the value of $\boldsymbol{d}_n$ is smaller than 0, it is determined that the curve becomes closer to $B(x_{n+1}, y_n)$. Such a decision variable $\boldsymbol{d}_n$ is defined as the following equation (4) using the same notations as used in the equation (2).

$$d_n = 4 \cdot f(r_{n+1}, i_n - 0.5) \tag{4}$$

Here, $i_n$ is an integer being closest to $l_n$ satisfying $f(r_n, l_n)$. Therefore, when the value of the decision variable $d_n$ can be known, the value of $d_{n+1}$, the $(n+1)th$ integer focusing delay distance $i_{n+1}$ and the focusing reference distance $r_{n+1}$ can be decided on a geometrically two-dimensional plane in which unit distances relevant to **r** and **i** are defined. Thus, a focusing delay distance can be calculated with respect to the varying focusing distance on a real-time basis.

In the article "An efficient real time focusing delay calculation in ultrasonic imaging systems" by Ki Jeon, Moo H. Bae et al., in Ultrasonic Imaging, Vol. 16, no. 4 , pp 231 - 248 (ISSN 0161-7364) ) it is described an efficient real time focusing delay calculation algorithm for variable sampling clock generation with high accuracy needed in digital focusing in ultrasonic imaging systems. The proposed algorithm is an extension of the midpoint drawing algorithm involving a focusing distance which is varied using a focusing reference distance, an integer focusing delay distance and a decision variable.

However, in the case that it is desired to obtain a more precise integer focusing delay distance *i*, a unit distance must be short. For doing so actually, a clock frequency should be heightened as much as the shortened unit distance. Consequently, high-speed hardware is required. When high-speed hardware is not supposed to use, the *i*-axis or *l*-axis should be different from the *r*-axis in scale. That is, the *i*-axis should be designed densely and the *r*-axis should be designed sparsely. However, in this case, when the unit distance of *r* is small, it becomes more difficult to satisfy the condition expressed as equation (3).

## SUMMARY OF THE INVENTION

To solve the above problems, it is an object of the present invention to provide a method and apparatus which can obtain a more precise focusing delay.

To accomplish the above object of the present invention, there is provided a method for varying the focal point of an ultrasonic imaging system, thus achieving real-time focusing by calculating a focusing delay distance for each of array elements constituting an array transducer in an ultrasonic imaging system in which a focal point is varied on the basis of a midpoint algorithm, on the real-time basis with regard to a focusing distance which is varied using a focusing reference distance (r), an integer focusing delay distance (i) and a decision variable (d), characterized in that the method comprises the steps of:

(a) calculating a delay variable corresponding to each array element at an $(n+1)th$ focal point, using a focusing reference distance, an integer focusing delay distance and a decision variable which correspond to the each array element at an n-*th* focal point, as a value having places below a decimal point;
(b) calculating the focusing reference distance, the integer focusing delay distance and the decision variable corresponding to the each array element at the $(n+1)th$ focal point, using the delay variable in step (a); and
(c) producing a focusing delay distance corresponding to the each array element at the $(n+1)th$ focal point, by adding the delay variable calculated in step (a) and the integer focusing delay distance calculated in step (b).

There is also provided an apparatus for varying the focal point of an ultrasonic imaging system, thus achieving real-time focusing by calculating a focusing delay distance for each of array elements constituting an array transducer in an ultrasonic imaging system in which a focal point is varied on the basis of a midpoint algorithm, on the real-time basis with regard to a focusing distance which is varied using a focusing reference distance (r), an integer focusing delay distance (i) and a decision variable (d), characterized in that the apparatus comprises:

delay variable calculation means for calculating delay variable corresponding to each array element at an $(n+1)th$ focal point, using a focusing reference distance, integer focusing delay distances and decision variables corresponding to the each array element at an n-*th* focal point; as a value having places below a decimal decimal point; and updating means for producing the integer focusing delay distance and the decision variable corresponding to the each array element at the $(n+1)th$ focal point, using the delay variable calculated by the delay variable calculation means, and supplying the produced integer focusing delay distance and decision variable to the delay variable calculation means.

## BRIEF DESCRIPTION OF THE DRAWINGS

The preferred embodiments are described with reference to the drawings wherein:

Fig. 1 is a geometrically conceptual diagram for explaining a focusing delay with respect to individual array elements in an array transducer;
Fig. 2 is a view for explaining the selection of the next [another] point using a decision variable of a midpoint algorithm; and

Fig. 3 is a block diagram showing a varying sampling clock generator according to a preferred embodiment of the present invention.

## DETAILED DESCRIPTION OF THE PREFERRED EMBODIMENT

A preferred embodiment of the present invention will be described in detail with reference to the accompanying drawings.

The present invention is basically to obtain $i$ to make $d_n$ further closer to '0'. In other words, a delay variable $e_n$ satisfying the following equation (5) is simply calculated on a real-time basis, in order to obtain an (n+1)$th$ integer focusing delay distance.

$$4f(r_{n+1}, i_n+e_n)=0 \qquad (5)$$

Since an exact $e_n$ cannot be simply calculated, an approximation value of $e_n$ is obtained according to the following procedure in actuality. First, the following equation (5) is primarily differentiated and then linearly approximated, to obtain the following equation (6).

$$0 = 4f( r_{n+1}, i_n + e_n) \fallingdotseq 4f(r_{n+1}, i_n )+4\frac{\partial f}{\partial i_n}e_n \fallingdotseq d_n +\frac{\partial f}{\partial i_n}e_n \qquad (6)$$

Here, $r_{n+1}$ is obtained by adding an integer and $r_n$, and the following equation (7) is established.

$$4\frac{\partial f}{\partial i_n} = 8 i_n+8 r_n+4 \qquad (7)$$

As a result, a delay variable $e_n$ is expressed as the following equation (8).

$$e_n=\frac{- d_n}{8( i_n + r_n + 1/2)} \qquad (8)$$

Using the equation (8), an accurate $i_{n+1}$ down to three or more places of a decimal point is generally obtained. The delay variable (e) is represented as a value having places below a decimal point When u>10, $i_{n+1}$ having one or more places on the right of a decimal point is obtained even when $r_n$ is small. Here, an inequality **u**>10 means that a unit distance **u** is greater than 10, in which the unit distance is given to a distance travelled by an ultrasonic wave during a one-period of master clock. For example, when a master clock frequency is 50MHz, a unit distance is about 0.03mm underwater and thus satisfying u>0.3mm is sufficient.

Further advantageously, a general division of an integer needs a considerable complexity in hardware. However, in equation (8), a quotient of the division is pre-defined within ±0.5 and only the quotient of 2~3 bits being a word length of a desired accuracy is calculated. Thus, a division operation can be accomplished by a smaller number of adders and registers.

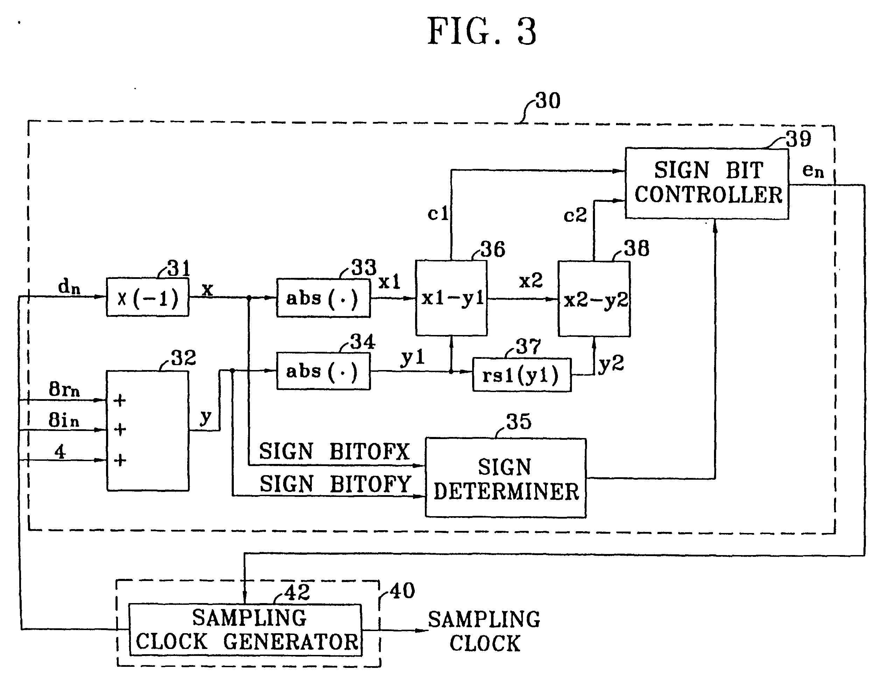

Fig. 3 is a block diagram showing a varying sampling clock generator according to a preferred embodiment of the present invention. In Fig. 3, a delay variable calculator 30 uses a focusing reference distance, an integer focusing delay distance and a decision variable corresponding to an array element at an n-$th$ focal point, to calculate a delay variable corresponding to the array element at an (n+1)$th$ focal point. An updating unit 40 uses the delay variable $e_n$ calculated by the delay variable calculator 30 to calculate an integer focusing delay distance $i_{n+1}$ and a decision variable $d_{n+1}$ corresponding to the array elements at an (n+1)$th$ focal point. More specifically, the updating unit 40 adds the delay variable $e_n$ received from the delay variable calculator 30 and an integer focusing delay distance $i_n$ stored in internal memory (not shown), to then produce an integer focusing delay distance $i_{n+1}$ corresponding to the array element at the (n+1)$th$ focal point, and calculates the corresponding decision variable $d_{n+1}$ at the (n+1)$th$ focal point using the equation (8). The focusing reference distance $r_{n+1}$ is produced by adding the n-$th$ focusing reference distance $r_n$ and an integer. The focusing reference distance $r_{n+1}$, the integer focusing delay distance $i_{n+1}$ and the decision variable $d_{n+1}$ corresponding to the (n+1)$th$ focal point are supplied to the delay variable calculator 30 so that the delay variable corresponding to the array element at an (n+2)$th$ focal point is calculated.

The updating unit 40 includes a sampling clock generator 42 for generating sampling clock to acquire an ultrasonic wave signal from the (n+1)*th* focal point of the corresponding array element. The sampling clock generator 42 generates sampling clock for acquiring an ultrasonic wave signal from the (n+1)*th* focal point at the time delayed by a time corresponding to the focusing delay distance being the added result of the delay variable $e_n$ and integer focusing delay distance $i_{n+1}$ at the (n+1)*th* focal point from a time corresponding to the n-th focal point.

A calculation procedure of the delay variable $e_n$ used in calculation of the focusing delay distance corresponding to the (n+1)*th* focal point will be described below in more detail.

The $d_n$, $r_n$, and $i_n$ input to the delay variable calculator 30 are constructed with an N-bit word, respectively and N-bit is generally sufficient as 20 bits. Thus, N-bit adders, multiplexers and registers are needed to calculate the input variables. A multiplier 31 embodied by an N-bit adder inverts the sign of an input n-*th* decision variable $d_n$ and outputs the sign-inverted data x. The data x is supplied to a first absolute value calculator 33 and the sign bit of the data x is supplied to a sign determiner 35. An operator 32 embodied by two N-bit adders outputs data y which results from $8r_n+8i_n+4$ with respect to the input $r_n$, $i_n$ and 4. The data y is supplied to a second absolute value calculator 34 and the sign bit of the data y is supplied to the sign determiner 35.

The first absolute value calculator 33 which is embodied with an N-bit adder and an N-bit multiplexer, calculates an absolute value x1 of the data x received from the multiplier 31. The absolute value x1 is output to a first subtracter 36. A second absolute value calculator 34 which is embodied with an N-bit adder and an N-bit multiplexer calculates an absolute value y1 of the data y received from the operator 32. The absolute value y1 is output to the first subtracter 36 and a shifter 37.

Meanwhile, the sign determiner 35 which is embodied with a single exclusive OR gate having one-bit output, receives the sign bits of the data x and y output from the multiplier 31 and the operator 32 and produces data Q_SIGN from the received sign bits. The data Q_SIGN is supplied to a sign controller 39. The first subtracter 36 subtracts the absolute value y1 of the second absolute value calculator 34 from the absolute value x1 of the first absolute value calculator 33, and outputs the resultant carry bit c1 and subtracted result x2 to the sign controller 39 and a second subtracter 38, respectively. The shifter 37 shifts the absolute value y1 supplied from the second absolute value calculator 34 by a one-bit to the right, and supplies the resultant data y2 to the second subtracter 38. The second subtracter 38 subtracts the data x2 output from the first subtracter 36 by the data y2 supplied from the shifter 37, and supplies the resultant carry bit c2 to the sign controller 39.

The sign controller 39 which is embodied with a two-bit adder and a two-bit multiplexer, produces a two-bit data having the carry bit c1 as a most significant bit (MSB) and the carry bit c2 as a least significant bit (LSB). The sign controller 39 uses the data Q_SIGN supplied from the sign determiner 35 as a sign of the two-bit data constituted with the carry bits c1 and c2. Therefore, the delay variable $e_n$ that is finally output from the sign controller 39 is a three-bit data constituted with the carry bits c1 and c2 and the data Q_SIGN as a sign bit.

The delay variable $e_n$ output from the delay variable calculator 30 is supplied to the updating unit 40, and is used for generation of sampling clock for an (n+1)*th* focal point.

Meanwhile, when a calculation speed of the delay variable should be considerably fast, a pipelined register is used to perform a pipeline operation.

The Fig. 3 embodiment has been described to calculate the delay variable for a single array element. However, it is apparent to a person skilled in the art that the above description can be applied to the other array elements constituting an array transducer.

The above-described embodiment has been described with respect to generation of the sampling clock. However, various modifications and variations are possible as described below.

An integer focusing delay distance and a corresponding delay variable can be used as a control signal for delay taps to delay an ultrasonic wave signal received from a general analog beam former on an analog basis.

U.S. patent No. 5,345,426 entitled "Delay interpolator for digital phased array ultrasound beamformers", which issued on September 6, 1994, discloses technique that coarsely samples an ultrasonic wave signal received via each channel, and then produces data to be used for imaging through interpolation. The delay variable and the corresponding integer focusing delay distance calculated according to the present invention can be used for determination of a data set to be used for interpolation. It is possible to use the delay variable in determination of an interpolation coefficient.

Referring to a paper entitled "Electronic scanner for a phased-array ultrasound transducer" by Ronald D. Gatzke, James T. Fearnside, and Sydney M. Karp, disclosed in Hewlett Packard Journal Vol. 34, No. 12, pp. 13-20, December 1983, a delay variable and a corresponding integer focusing delay distance according to the present invention can be used for rotation of a phase of a radio-frequency (RF) signal. This uses the fact that a RF envelop is not much varied for a one-sample interval.

As described above, the method and apparatus according to the present invention can obtain a focusing delay distance represented with accuracy below a decimal point with respect to a varying focal point. Accordingly, calculation of a focusing delay distance represented with accuracy below a decimal point can be realized with the addition of simple hardware, and thus, the manufacturing cost is low.

**Claims**

1. A method for varying the focal point of an ultrasonic imaging system, thus achieving real-time focusing by calculating a focusing delay distance for each of array elements consituting an array transducer in an ultrasonic imaging system in which a focal point (P) is varied on the basis of a midpoint algorithm, on the real-time basis with regard to a focusing distance which is varied using a focusing reference distance (r), an integer focusing delay distance (i) and a decision variable (d),
   **characterized in that** the method comprises the steps of:

   (a) calculating a delay variable ($e_n$) corresponding to each array element at an (n+1)*th* focal point, using a focusing reference distance ($r_n$), an integer focusing delay distance ($i_n$) and a decision variable ($d_n$) which correspond to said each array element at an n-*th* focal point, as a value having places below a decimal point;
   (b) calculating the focusing reference distance ($r_{n+1}$), the integer focusing delay distance ($i_{n+1}$) and the decision variable ($d_{n+1}$) corresponding to said each array element at the (n+1)*th* focal point, using the delay variable in step (a); and
   (c) producing the focusing delay distance corresponding to said each array element at the (n+1)*th* focal point, by adding the delay variable ($e_n$) calculated in step (a) and the integer focusing delay distance ($i_{n+1}$) calculated in step (b).

2. A method for calculating the focusing delay time according to claim 1, wherein the delay variable $e_n$ corresponding to a particular array element of the (n+1)*th* focal point is calculated by the following equation,

$$e_n = -d_n/8(i_n + r_n + 1/2),$$

   where $d_n$, in and $r_n$ are a decision variable, an integer focusing delay distance and a focusing reference distance corresponding to said each array element at the n-*th* focal point, respectively.

3. A method for calculating the focusing delay time according to claim 1, wherein the actual focusing delay distance obtained in said step (c) is used for generation of sampling clock to acquire an ultrasonic wave signal from the (n+1)*th* focal point of the corresponding array element.

4. The method for calculating the focusing delay time according to claim 1, wherein the focusing delay distance obtained in step (c) is used to control the delay of the ultrasonic wave signal received from an analog beam former on an analog basis.

5. An apparatus for varying the focal point of an ultrasonic imaging system, thus achieving real-time focusing by calculating a focusing delay distance for each of array elements consituting an array transducer in an ultrasonic imaging system in which a focal point (P) is varied on the basis of a midpoint algorithm, on the real-time basis with regard to a focusing distance which is varied using a focusing reference distance (r), an integer focusing delay distance (i) and a decision variable (d),
   **characterized in that** the apparatus comprises:

   delay variable calculation means (30) for calculating delay variable ($e_n$) corresponding to each array element at an (n+1)*th* focal point, using a focusing reference distance ($r_n$), integer focusing delay distances ($i_n$) and decision variables ($d_n$) corresponding to said each array element at an n-*th* focal point, as a value having places below a decimal point; and
   updating means (40) for producing the integer focusing delay distance ($i_{n+1}$) and the decision variable ($d_{n+1}$) corresponding to said each array element at the (n+1)*th* focal point, using the delay variable ($e_n$) calculated by the delay variable calculation means (30), and supplying the produced integer focusing delay distance ($i_{n+1}$) and decision variable ($d_{n+1}$) to the delay variable calculation means (30).

6. The focusing delay time calculation apparatus according to claim 5, wherein the delay variable $e_n$ corresponding to a particular array element of said (n+1)*th* focal point is calculated by the following equation,

$$e_n = -d_n/8\,(i_n + r_n + 1/2),$$

where $d_n$, $i_n$ and $r_n$ are a decision variable, an integer focusing delay distance and a focusing reference distance corresponding to said particular array element at the n-*th* focal point, respectively.

7. The focusing delay time calculation apparatus according to claim 5, wherein said updating means comprises a sampling clock generator for generating sampling clock to acquire an ultrasonic wave signal from the (n+1)*th* focal point of the corresponding array element, using the delay variables calculated by said delay variable calculation means.

8. The focusing delay time calculation apparatus according to claim 7, wherein said sampling clock generator generates sampling clock for a corresponding array element based on addition of the delay variable and the corresponding integer focusing delay distance.

**Patentansprüche**

1. Verfahren zum Variieren des Brennpunktes eines Ultraschall-Bildgebungssystems, um somit eine Fokussierung in Echtzeit zu erhalten, indem ein Fokussier-Verzögerungsabstand für ein jedes, einen Array-Wandler in einem Ultraschall-Bildgebunssystem bildendes Array-Element errechnet wird, wobei ein Brennpunkt (P) auf der Basis eines Mittelpunktsalgorithmus', auf Echtzeitbasis in Bezug auf einen Fokussierabstand, welcher unter Verwendung eines Fokussier-Referenzabstandes (r) variiert wird, eines ganzzahligen Fokussier-Verzögerungsabstandes (i) und einer Entscheidungsvariablen (d) variiert wird,
   **dadurch gekennzeichnet, daß** das Verfahren die folgenden Schritte umfaßt:

   (a) Errechnen einer Verzögerungsvariablen ($e_n$) entsprechend einem jeden Array-Element an einem (n+1)-ten Brennpunkt unter Verwendung eines Fokussier-Referenzabstandes ($r_n$), eines ganzzahligen Fokussier-Verzögerungsabstandes ($i_n$) und einer Entscheidungsvariablen ($d_n$), welche einem jeden der Array-Elemente an einem n-ten Brennpunkt entsprechen, als ein Wert, welcher Stellen hinter dem Dezimalzeichen aufweist;

   (b) Errechnen des Fokussier-Referenzabstandes ($r_{n+1}$), des ganzzahligen Fokussier-Verzögerungsabstandes ($i_{n+1}$) und der Entscheidungsvariablen ($d_{n+1}$) entsprechend einem jeden der Array-Elemente an dem (n+1)-ten Brennpunkt unter Verwendung der Verzögerungsvariablen in Schritt (a); und

   (c) Erzeugen des Fokussier-Verzögerungsabstandes entsprechend einem jeden der Array-Elemente an dem (n+1)-ten Brennpunkt, indem die in Schritt (a) errechnete Verzögerungsvariable ($e_n$) und der in Schritt (b) errechnete ganzzahlige Fokussier-Verzögerungsabstand ($i_{n+1}$) addiert werden.

2. Verfahren zum Errechnen der Fokussier-Verzögerungszeit nach Anspruch 1, wobei die Verzögerungsvariable ($e_n$) entsprechend einem bestimmten Array-Element an dem (n+1)-ten Brennpunkt mittels der nachfolgenden Gleichung errechnet wird:

$$e_n = -d_n / 8 \, (i_n + r_n + 1/2);$$

   wobei $d_n$, in und $r_n$ eine Entscheidungsvariable, ein ganzzahliger Fokussier-Verzögerungsabstand bzw. ein Fokussier-Referenzabstand entsprechend einem jeden der Array-Elemente an dem n-ten Brennpunkt sind.

3. Verfahren zum Errechnen der Fokussier-Verzögerungszeit nach Anspruch 1, wobei der in Schritt (c) erhaltene, aktuelle Fokussier-Verzögerungsabstand zur Erzeugung der Abtastrate verwendet wird, um ein Ultraschallwellen-Signal von dem (n+1)-ten Brennpunkt des entsprechenden Array-Elementes zu erlangen.

4. Verfahren zum Errechnen der Fokussier-Verzögerungszeit nach Anspruch 1, wobei der in Schritt (c) erhaltene Fokussier-Verzögerungsabstand zur Steuerung der Verzögerung des Ultraschallwellen-Signals verwendet wird, welches von einem analogen Beamformer auf einer analogen Basis empfangen worden ist.

5. Vorrichtung zum Variieren des Brennpunktes eines Ultraschall-Bildgebungssystems, um somit eine Fokussierung in Echtzeit zu erhalten, indem ein Fokussier-Verzögerungsabstand für ein jedes, einen Array-Wandler in einem Ultraschall-Bildgebunssystem bildendes Array-Element errechenbar ist, wobei ein Brennpunkt (P) auf der Basis eines Mittelpunktsalgorithmus', auf Echtzeitbasis in Bezug auf einen Fokussierabstand, welcher unter Verwendung eines Fokussier-Referenzabstandes (r) variierbar ist, eines ganzzahligen Fokussier-Verzögerungsabstandes (i) und einer Entscheidungsvariablen (d) variierbar ist,
**dadurch gekennzeichnet, daß** die Vorrichtung umfaßt:

- Verzögerungsvariablen-Errechnungsmittel (30) zum Errechnen von Verzögerungsvariablen ($e_n$) entsprechend einem jeden Array-Element an einem (n+1)-ten Brennpunkt unter Verwendung eines Fokussier-Referenzabstandes ($r_n$), ganzzahliger Fokussier-Verzögerungsabstände ($i_n$) und Entscheidungsvariablen ($d_n$), welche einem jeden der Array-Elemente an einem n-ten Brennpunkt entsprechen, als ein Wert, welcher Stellen hinter dem Dezimalzeichen aufweist; und

- Updating-Mittel (40) zum Erzeugen des ganzzahligen Fokussier-Verzögerungsabstandes ($i_{n+1}$) und der Entscheidungsvariablen ($d_{n+1}$) entsprechend einem jeden der Array-Elemente an dem (n+1)-ten Brennpunkt unter Verwendung der von dem Verzögerungsvariablen-Errechnungsmittel (30) errechneten Verzögerungsvariablen ($e_n$), und zum Überführen des erzeugten ganzzahligen Fokussier-Verzögerungsabstandes ($i_{n+1}$) und der erzeugten Entscheidungsvariablen ($d_{n+1}$) an das Verzögerungsvariablen-Errechnungsmittel (30).

**6.** Vorrichtung zum Errechnen der Fokussier-Verzögerungszeit nach Anspruch 5, wobei die Verzögerungsvariable ($e_n$) entsprechend einem bestimmten Array-Element an dem (n+1)-ten Brennpunkt mittels der nachfolgenden Gleichung errechenbar ist:

$$e_n = -d_n / 8 (i_n + r_n + 1/2);$$

wobei $d_n$, in und $r_n$ eine Entscheidungsvariable, ein ganzzahliger Fokussier-Verzögerungsabstand bzw. ein Fokussier-Referenzabstand entsprechend einem jeden der Array-Elemente an dem n-ten Brennpunkt sind.

**7.** Vorrichtung zum Errechnen der Fokussier-Verzögerungszeit nach Anspruch 5, wobei das Updating-Mittel (40) einen Abtastraten-Erzeuger zum Erzeugen von Abtastraten aufweist, um unter Verwendung der von dem Verzögerungsvariablen-Errechnungsmittel (30)errechneten Verzögerungsvariablen ein Ultraschallwellen-Signal von dem (n+1)-ten Brennpunkt des entsprechenden Array-Elementes zu erlangen.

**8.** Vorrichtung zum Errechnen der Fokussier-Verzögerungszeit nach Anspruch 7, wobei der Abtastraten-Erzeuger Abtastraten für ein entsprechendes Array-Element auf der Basis der Summe der Verzögerungsvariablen und des zugehörigen ganzzahligen Fokussier-Verzögerungsabstandes erzeugt.

**Revendications**

**1.** Procédé pour modifier le point focal d'un système d'imagerieà ultrasons, permettant ainsi d'obtenir une mise au point en temps réel par calcul d'une distance de retard de mise au point pour chacun des éléments constituants un réseau formant transducteur dans un système d'imagerie à ultrasons, dans lequel un point focal (P) est modifié sur une base d'un algorithme de point médian, sur la base en temps réel en rapport avec une distance de mise au point qui est modifiée moyennant l'utilisation d'une distance de référence de mise au point (r), d'une distance de retard de mise au point formée d'un entier (i) et d'une variable de décision (d),
**caractérisé en ce que** le procédé comprend les étapes consistant à:

(a) calculer une variable de retard ($e_n$) correspondant à chaque élément de réseau en un (n+1)-ème point focal, en utilisant une distance de référence de mise au point ($r_n$), une distance de retard de mise au point formé d'un entier ($i_n$) et une variable de décision ($d_n$), qui correspond à chaque élément de réseau en un n-ème point focal, en tant que valeur ayant des positions au-dessous d'une virgule décimale;
(b) calculer la distance de référence de mise au point ($r_{n+1}$), la distance de retard de mise au point formée d'un entier ($i_{n+1}$) et la variable de décision ($d_{n+1}$) correspondant à chacun desdits éléments du réseau au niveau du (n+1)-ème point focal, moyennant l'utilisation d'une variable de retard lors de l'étape (a); et
(c) produire la distance de retard de mise au point correspondant à chacun desdits éléments du réseau au (n+1)-ème point focal, par addition de la variable de retard ($e_n$) calculée lors de l'étape (a) et d'une distance de mise au point formé d'un entier ($i_{n+1}$) calculé lors de l'étape (b).

**2.** Procédé pour calculer le temps de retard de mise au point selon la revendication 1, selon lequel la variable de

retard $e_n$ correspondant à un élément de réseau particulier du (n+1)-ème point focal est calculée au moyen de l'équation suivante

$$e_n = -d_n/8(i_n+r_n+1/2),$$

$d_n$, $i_n$ et $r_n$ étant respectivement une variable de décision, une distance de retard de mise au point formée d'un entier et une distance de référence de mise au point correspondant à chacun desdits éléments de réseau au niveau du n-ème point focal.

3. Procédé pour calculer le temps de retard de mise au point selon la revendication 1, selon lequel la distance de retard de mise au point réel obtenue lors de ladite étape (c) est utilisée pour produire un signal d'horloge d'échantillonnage pour l'acquisition d'un signal d'onde ultrasonique à partir du (n+1)-ème point focal de l'élément de réseau correspondant.

4. Procédé pour calculer le temps de retard de mise au point selon la revendication 1, selon lequel la distance de retard de mise au point obtenue lors de l'étape (c) est utilisée pour commander le retard du signal d'onde ultrasonique reçu depuis un dispositif de mise en forme de faisceau analogique sur une base analogique.

5. Dispositif pour modifier le point focal d'un système d'imagerie à ultrasons, en permettant ainsi d'obtenir une mise au point en temps réel par calcul d'une distance de retard de mise au point pour chacun des éléments constituants un réseau formant transducteur dans un système d'imagerie à ultrasons, dans lequel un point focal (P) est modifié sur la base d'un algorithme de point médian, sur une base en temps réel en rapport avec une distance de mise au point qui est modifiée moyennant l'utilisation d'une distance de référence de mise au point (r), d'une distance de retard de mise au point formée d'un entier (i) et une variable de décision (d),
**caractérisé en ce que** le dispositif comprend :

des moyens (30) de calcul de la variable de retard pour calculer la variable de retard ($e_n$) correspondant à chaque élément de réseau en un (n+1)-ème point focal, en utilisant une distance de référence de mise au point ($r_n$), une distance de retard de mise au point formé d'un entier ($i_n$) et une variable de décision ($d_n$), qui correspond à chaque élément de réseau en un n-ème point focal, en tant que valeur ayant des positions au-dessous d'une virgule décimale; et
des moyens de mise à jour (40) pour produire la distance de retardement de mise au point formée d'un entier ($i_{n+1}$) et la variable de décision ($d_{n+1}$) correspondant à chacun desdits éléments de réseau au niveau du (n+1)-ème point focal, en utilisant la variable de retard ($e_n$) par les moyens (30) de calcul de la variable de retard, et envoyer la distance la distance de retard de mise au point formée d'un entier ($i_{n+1}$) et la variable de décision ($d_{n+1}$) aux moyens (30) de calcul de la variable de retard.

6. Dispositif de calcul du temps de retardement de mise au point selon la revendication 5, dans lequel la variable de retard en correspondant à un élément de réseau particulier du (n+1)-ème point focal est calculée au moyen de l'équation suivante

$$e_n = -d_n/8(i_n+r_n+1/2),$$

$d_n$, $i_n$ et $r_n$ étant respectivement une variable de décision, une distance de retard de mise au point formée d'un entier et une distance de référence de mise au point correspondant à chacun desdits éléments de réseau au niveau du n-ème point focal.

7. Dispositif de calcul du temps de retardement de mise au point selon la revendication 5, dans lequel lesdits moyens de mise à jour comprennent un générateur de signal d'horloge d'échantillonnage pour générer un signal d'horloge d'échantillonnage pour acquérir un signal d'onde ultrasonique à partir du (n+1)-ème point focal de l'élément de réseau correspondant en utilisant les variables de retard calculées par lesdits moyens de calcul de la variable de retard.

8. Dispositif de calcul du temps de retard de mise au point selon la revendication 7, dans lequel ledit générateur de signal d'horloge d'échantillonnage génère un signal d'horloge d'échantillonnage pour un élément de réseau correspondant sur la base de l'addition de la variable de retard et de la distance correspondante de retard de mise au point formée d'un entier.

# FIG. 1

SCANNING LINE

p

r

r

θ

l

1

x

0

# FIG. 2

$A(x_n, y_n)$

$B(x_{n+1}, y_n)$

$d_n < 0$

$y_n - 1/2$

$d_n > 0$

$C(x_n, y_n-1)$

$D(x_{n+1}, y_n-1)$

# FIG. 3

EP 0 856 831 B1